# EUROPEAN PATENT APPLICATION

(11) **EP 0 620 204 A1**
(43) Date of publication of application: **19.10.1994**
(21) Application number: 94830113.0
(22) Date of filing: 17.03.1994
(51) Int. Cl.: C05G 3/00, B01J 13/00, A01G 27/00

(54) **Moisturizing and/or nutrient agent and method for producing the same**

(30) Priority: 17.03.1993 IT BO930093; 03.09.1993 IT BO930359
(71) Applicant: R.A.N. RICERCHE APPLICATE NATURALI S.r.l., Castenaso (Bologna) (IT)
(72) Inventor: Favalini, Francesca, Bologna (IT)
(74) Representative: Dall'Olio, Giancarlo

(57) **Abstract**

The moisturizing and nutrient agent of high viscosity is constituted basically by water, a hydrated metallic salt, cellulosic compound and concentrated dressing. This agent can release water and nutrient substances when interacting with biological organisms contained in soil surrounding a plant or in water for hydrophonics. Also a method is described for producing a moisturizing and nutrient agent capable to provide a vegetal organism with water, air and concentrated dressing.

## Description

The present invention relates to a technical field concerning methods, instruments and products used for plants irrigation, protection and dressing.

The present invention concerns a new method for producing a moisturizing agent to which plant protection products and/or dressing can be added, this agent being used to moisture soil surrounding plants rooted either directly in the ground or in a flower-pot.

It is often difficult to maintain constant moisture of soil surrounding the plant either during various phases of plant growth or during changeable ambient conditions. In fact, the degree of soil moisture at the level of the plant roots is vital for the same plant, specially during highly evaporative condition.

Up to now, the moisture has been typically added to the soil by watering using manual or automatic means such as sprinkler systems.

A further method, used so far, for maintaining the ground moisture, utilizes the sponge like materials which are previously mixed with the soil surrounding the plant roots and then imbued with water during the sprinkling watering either natural or artificial.

Then, due to evaporation, such sponge like materials gradually release water contained therein to the plant soil. The soil prepared in that way is subject to evaporation and requires frequent watering in adverse condition.

Therefore, the disadvantage of such methods lies in the necessity of many additions of water during highly evaporative conditions e.g. hot weather, high winds, and the like.

A further disadvantage lies in the fact that such watering methods require the presence, also occasional, of a watering operator or an automatic watering system, extremely expensive.

The main object of the present invention is to propose a method that uses a moisturizing and nutrient agent capable to moisturize and nourish automatically, by gradual release of water, gas and dressing, the soil surrounding the plant roots either in a flower pot or in the ground, or able to release gradually the nutrient substances to the hydrophonics water.

A further object of the present invention is to propose a method employing a moisturizing agent that is not subject to excessive evaporation and that maintains unchanged its physical-chemical properties also in high temperatures and that does not return to the liquid state in normal environmental conditions.

Another object of the present invention is to provide a moisturizing agent that is not toxic in any way and that does not leave waste at the end of the whole moisturizing process.

Yet another object of the present invention is to propose an agent which is easily manufactured and used and which may be stored for long periods of time without altering its organoleptic characteristics.

The above mentioned objects are obtained in accordance with the preamble of claims 1 and 24.

The present invention concerns a moisturizing and nutrient agent designed to release water to soil in which a plant is rooted.

Such an agent comprises substantially: water ranging from 97% to 99% by weight, basic cellulosic compound ranging from 1% to 3% by weight, and an astringent compond such as a hydrated metallic salt ranging from 0,1% to 0,3% by weight.

The basic cellulosic compound, obtainable from natural elements such as bark of some plants, is constituted by molecules of glucose joined in a cellulosic chain of a high average molecular weight, on the ranging from 100.000 and 750.000.

The cellulosic compound is formed by substituting carboxylic groups on the glucose molecules of the cellulosic chain through an ether linkage.

An example of such a compound is sodium carboxymethylcellulose that may release a high viscosity to the moisturizing agent, constituting therefore a kind of its carrying structure.

The hydrated metallic salt comprises substantially aluminium sulfate and it has a basically astringent function inside the moisturizing agent.

The moisturizing agent of the present invention is a substance of high viscosity that is simply placed on the top surface of the soil in which a plant is rooted.

Such agent releases gradually water to the soil when interacting with biological organisms present in the same soil, thus compensating constantly its moisture.

The mechanism of the releasing water and air by the moisturizing agent is basically associated with the fact that the biological organisms, such as enzymes, fungi and/or ferments metabolize gradually the carrying structure (cellulosic compund) of the moisturizing agent so as to allow it to release water contemporarily.

At the end of the metabolization process, that can last even many weeks, the moisturizing agent is completely dissolved in the soil.

The moisturizing agent can also comprise an antifermentative and antiseptic agent consisting essentially of 0,1% quantity by weight of methyl paraoxybenzoate.

Further forms of the moisturizing agent provide water contained therein either aerated or demineralized.

In the first case the moisturizing agent releases not only water to the soil with which it is in contact, but also air that contributes considerably to increase the fertility of the soil of the plant cultivation.

In the second case, the use of demineralized water helps the aggregation of the single components of the same agent while it is produced, and then, when the agent is used, it reduces considerably the dispersion of toxic substances, such as limestone and chlorine normally present in water used for plant irrigation, in the soil during the plant growth.

The moisturizing and nutrient agent may also contain more than 1% by weight of concentrated dressings. Such concentrated dressings are real fertility elements that can be subdivided in single elements, binary compounds, microelements, additive and organic compounds.

The single fertilizing elements comprise monocalcic phosphate represented by the formula CaHPO₄, calcium nitrate represented by the formula Ca(NO₃)₂, ammonium nitrate represented by the formula NH₄NO₃ and potassium chloride represented by the formula KCl.

The "binary" fertilizing elements comprise potassium nitrate represented by the formula KNO₃ and ammonium sulfate represented by the formula (NH₄)₂SO₄.

The fertilizing microelements comprise copper sulfate (CuSO₄), zinc sulfate (ZnSO₄), manganese sulfate (MnSO₄), iron sulfate (FeSO₄), iron chelate (Fe₂(SO₄)₃)), ammonium molybdate (NH₄)Mo₄)) and boracic acid (H₃BO₃).

The additive fertilizing elements comprise essentially colloidal sulphur, while those "organic compounds" comprise simple sugars such as glucose (C₆H₁₂O₆) and compound sugars such as di- , tri- and tetra-saccharides.

The experimental tests of the moisturizing agent being the subject of the present invention have proved that it is almost completely insoluble in water lacking biological organisms either at environmental temperature and pressure or at boiling water temperature.

Other experimental tests performed on vegetals grown with such agent have confirmed the total absence of toxic effects either in vegetals or in the animals feeding on same vegetals.

The present invention refers also to the method of producing a moisturizing and nutrient agent, able to furnish a vegetal organism with water and gas.

Such method essentially provides sequential operative phases, a first phase in which the principal component of the moisturizing agent is prepared, a second phase concerning mixing of the principal component with an astringent compound, a third phase regarding mixing of the preparation obtained in second phase with a basic cellulosic compound, and a forth phase of vigorous agitation of the preparation.

The first phase provides the vigorous agitation of 97% to 99% by weight of water, demineralized, or not. The vigorous agitation of water allows to saturate it with air that gets entrained in water under the form of bubbles.

The second phase provides the introduction into the aerated water, of an astringent compound that substantially consists of 0,1% to 0,3% by weight of aluminium sulfate. In this phase, the complete dissolution or hydration of the astringent compound takes place.

In the third phase the preparation obtained in the second phase is mixed with a quantity, ranging from 1 to 3% by weight, of basic cellulosic compound, consisting substantially of sodium carboxymethylcellulose having a high average molecular weight.

In the fourth phase the preparation is constantly and vigorously agitated for a time long enough for the same preparation to gelate. The resultant moisturizing agent is a jelly-like substance of very high viscosity having eintrained air bubbles.

This method of production a moisturizing agent comprises a variation constituted essentially by an intermediate phase between the above mentioned second and third phases.

This intermediate phase provides mixing of the preparation water-metallic salt with methyl paraoxybenzoate in a quantity correspondent to 0,1% of the agent final weight. The latter component can give the moisturizing agent anti-mould, antifermentative and antiseptic characteristics.

Another form of embodiment of the above described method provides a phase preceding the fourth one. This ulterior phase provides mixing of the preparation water-metallic salt-basic cellulosic compound with a concentrated dressing, comprising basically 1% by weight of nitrogen nitrate.

The basic advantage of the present invention lies in fact that it provides a method employing a moisturizing and nutrient agent able to automatically moisture and nourish, by releasing gradually water, gas and dressing, the soil surrounding the roots of a vegetable planted either in a pot or in soil, or able to release gradually nutrient substances to hydrophonics water.

A further advantage of the present invention is that it provides an agent which is insoluble at ambient temperature and atmospheric pressure.

Another advantage of the present invention is presented by the fact that it provides a moisturizing agent for vegetal organisms that dissolves completely in fertile soil where it is placed or in hydrophonics water and it is not toxic either for vegetal organisms or animals feeding on same vegetal organisms.

Yet another advantage of the present invention is that it provides a moisturizing agent that is easy to be realized, used, that can be easily stored for long periods of time without altering its organoleptic characteristics and that maintains its physicalchemical properties even at high ambient temperatures.

Obviously, the subject invention has been described as a mere example, not limitative, therefore it is evident that numerous changes, suggested by practice or the invention accomplishment or usage, can be added without departing from the principles defined in the following claims.

## Claims

1. Moisturizing agent that releases water when interacting with biological organisms contained in soil where a plant is rooted, characterized in that it comprises:
a) water ranging from 97% to 99% by weight;
b) basic cellulosic compound ranging from 1% to 3% by weight;
c) hydrated metallic salt ranging from 0,1% to 0,3% by weight.

2. Moisturizing and nutrient agent that releases water and nutrient substances when interacting with biological organisms contained in soil where a plant is rooted or in hydrophonics water, characterized in that it comprises:
a) water ranging from 97% to 99% by weight;
b) basic cellulosic compound ranging from 1% to 3% by weight;
c) hydrated metallic salt ranging from 0,1% to 0,3% by weight;
d) concentrated dressing more than 1% by weight.

3. Moisturizing agent according to claim 1, characterized in that it comprises also an antifermentative and antiseptic agent consisting mainly of methyl paraoxybenzoate in a quantity equal to 0,1% by weight of the agent.

4. Agent, according to claim 1, characterized in that a gas is added to said water.

5. Agent, according to claim 1, characterized in that said water is demineralized.

6. Moisturizing agent, according to claim 1, characterized in that said basic cellulosic compound is prevalently formed by sodium carboxymethylcellulose having a high average molecular weight.

7. Moisturizing agent, according to claim 1, characterized in that said hydrated metallic salt comprises essentially alluminium sulfate.

8. Moisturizing and nutrient agent, according to claim 2, characterized in that said concentrated dressing comprises monocalcic phosphate represented by the formula CaHPO₄.

9. Moisturizing and nutrient agent, according to claim 2, characterized in that said concentrated dressing comprises calcium nitrate represented by the formula Ca(NO₃)₂.

10. Moisturizing and nutrient agent, according to claim 2, characterized in that said concentrated dressing comprises ammonium nitrate represented by the formula NH₄NO₃.

11. Moisturizing and nutrient agent, according to claim 2, characterized in that said concentrated dressing comprises potassium chlorine represented by the formula KCl.

12. Moisturizing and nutrient agent, according to claim 2, characterized in that said concentrated dressing comprises potassium nitrate represented by the formula KNO₃.

13. Moisturizing and nutrient agent, according to claim 2, characterized in that said concentrated dressing comprises ammonium sulfate represented by the formula (NH₄)₂SO₄.

14. Moisturizing and nutrient agent, according to claim 2, characterized in that said concentrated dressing comprises copper sulfate represented by the formula CuSO₄.

15. Moisturizing and nutrient agent, according to claim 2, characterized in that said concentrated dressing comprises zinc sulfate represented by the formula ZnSO₄.

16. Moisturizing and nutrient agent, according to claim 2, characterized in that said concentrated dressing comprises manganese sulfate represented by the formula MnSO₄.

17. Moisturizing and nutrient agent, according to claim 2, characterized in that said concentrated dressing comprises iron sulfate represented by the formula FeSO₄.

18. Moisturizing and nutrient agent, according to claim 2, characterized in that said concentrated dressing comprises iron chelate represented by the formula FE₂(SO₄)₃.

19. Moisturizing and nutrient agent, according to claim 2, characterized in that said concentrated dressing comprises ammonium molybdate represented by the formula (NH₄)Mo₄.

20. Moisturizing and nutrient agent, according to claim 2, characterized in that said concentrated dressing comprises boracic acid represented by the formula H₃BO₃.

21. Moisturizing and nutrient agent, according to claim 2, characterized in that said concentrated dressing comprises essentially colloidal sulphur.

22. Moisturizing and nutrient agent, according to claim 2, characterized in that said concentrated dressing comprises simple sugars such as glucose (C₆H₁₂O₆).

23. Moisturizing and nutrient agent, according to claim 2, characterized in that said concentrated dressing comprises compound sugars such as di-, triand tetra-saccharides.

24. Method for producing a moisturizing and nutrient agent for a vegetal organism, said method being characterized in that it provides:
a) mixing water in a quantity equal to 97%-99% by weight of the agent with an astringent component, formed essentially by alluminium sulfate ranging from 0,1% to 0,3% by weight;
b) mixing the obtained preparation with a basic cellulosic compound, ranging from 1% to 3% by weight, comprising essentially sodium carboxymethylcellulose having a high average molecular weight;
c) agitation of the whole mixture for a few minutes.

25. Method, according to claim 24, characterized in that said water is to be enriched with gas by a vigorous agitation before being mixed with said astringent mixture.

26. Method, according to claim 24, characterized in that said employed water is previously demineralized.

27. Method, according to claim 24, characterized in that said mixture of water and astringent compound is further mixed with methyl paraoxybenzoate in a quantity equal to 0,1% by weight of the agent, before mixing with said basic cellulosic compound.

28. Method, according to claim 24, characterized in that said water is previously demineralized, then enriched with gas, and later mixed with said astringent compound and the so obtained mixture is mixed with a 0,1% quantity by weight of methyl paraoxybenzoate before being mixed with said basic cellulosic compound.

29. Method, according to claim 24, characterized in that more than 1% by weight of a concentrated dressing is added to the whole said mixture.
